# EUROPÄISCHE PATENTSCHRIFT

(11) **EP 2 307 931 B1**
(45) Veröffentlichungstag und Bekanntmachung des Hinweises auf die Patenterteilung: **08.06.2016**
(21) Anmeldenummer: 09781420.6
(22) Anmeldetag: 03.08.2009
(51) Int. Cl.: G05B 9/02, G05B 19/042

(54) **AUTARKES FELDGERÄT ODER AUTARKER FUNKADAPTER FÜR EIN FELDGERÄT DER AUTOMATISIERUNGSTECHNIK**
INDEPENDENT FIELD DEVICE OR INDEPENDENT WIRELESS ADAPTER FOR A FIELD DEVICE IN AUTOMATION TECHNOLOGY
APPAREIL DE TERRAIN AUTONOME OU ADAPTATEUR RADIO AUTONOME POUR UN APPAREIL DE TERRAIN DE LA TECHNOLOGIE D'AUTOMATISATION

(30) Priorität: 06.08.2008 DE 102008036554
(43) Veröffentlichungstag der Anmeldung: 13.04.2011
(73) Patentinhaber: Endress+Hauser Process Solutions AG, 4153 Reinach (CH)
(72) Erfinder: PROBST, Stefan, 79576 Weil am Rhein (DE); FIEDLER, Marc, 4102 Binningen (CH)
(74) Vertreter: Andres, Angelika Maria
(86) Internationale Anmeldenummer: PCT/EP2009/060030
(87) Internationale Veröffentlichungsnummer: WO 2010/015600

(56) Entgegenhaltungen:
- WO-A1-2005/103851
- DE-A1- 1 817 638
- US-A- 5 424 709
- US-A1- 2008 180 226

## Beschreibung

Die Erfindung betrifft ein autarkes Feldgerät oder einen autarker Funkadapter für ein Feldgerät der Automatisierungstechnik, das/der über eine dem Feldgerät oder dem Funkadapter zugeordnete oder zuordenbare Energieversorgungseinheit mit einer begrenzten Energie gespeist wird.

In der Prozessautomatisierungstechnik werden vielfach Feldgeräte eingesetzt, die zur Erfassung und/oder Beeinflussung von Prozessgrößen dienen. Zur Erfassung von Prozessgrößen dienen Sensoren, wie beispielsweise Füllstandsmessgeräte, Durchflussmessgeräte, Druck- und Temperaturmessgeräte, pH-Redoxpotentialmessgeräte, Leitfähigkeitsmessgeräte, etc., welche die entsprechenden Prozessvariablen Füllstand, Durchfluss, Druck, Temperatur, pH-Wert bzw. Leitfähigkeit erfassen. Zur Beeinflussung von Prozessgrößen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Neben den zuvor genannten Sensoren und Aktoren werden als Feldgeräte allgemein auch solche Einheiten bezeichnet, die direkt an einem Feldbus angeschlossen sind und zur Kommunikation mit den übergeordneten Einheiten dienen, wie z.B. Remote I/Os, Gateways, Linking Devices und Wireless Adapters. Eine Vielzahl solcher Feldgeräte wird von der Endress + Hauser-Gruppe hergestellt und vertrieben.

In modernen Industrieanlagen sind Feldgeräte in der Regel über Bussysteme (Profibus®, Foundation® Fieldbus, HART®, etc.) mit übergeordneten Einheiten verbunden. Normalerweise handelt es sich bei den übergeordneten Einheiten um Leitsysteme bzw. Steuereinheiten, wie beispielsweise eine SPS (speicherprogrammierbare Steuerung) oder eine PLC (Programmable Logic Controller). Die übergeordneten Einheiten dienen unter anderem zur Prozesssteuerung, Prozessvisualisierung, Prozessüberwachung sowie zur Inbetriebnahme der Feldgeräte. Die von den Feldgeräten, insbesondere von Sensoren, erfassten Messwerte werden über das angeschlossene Bussystem an eine oder gegebenenfalls auch an mehrere übergeordnete Einheit(en) übermittelt. Daneben ist auch eine Datenübertragung von der übergeordneten Einheit über das Bussystem an die Feldgeräte erforderlich; diese dient insbesondere zur Konfigurierung und Parametrierung von Feldgeräten oder zu Diagnosezwecken. Allgemein gesprochen, wird das Feldgerät über das Bussystem von der übergeordneten Einheit her bedient.

Dokument WO 2005/103851 A1 beschreibt Feldgeräte ohne Funkeinheiten die durch die Kopplung mit einem Wireless Adapter, der eine Funkeinheit aufweist, zu einem Funk-Feldgerät aufrüstet.

Neben einer drahtgebundenen Datenübertragung zwischen den Feldgeräten und der übergeordneten Einheit besteht auch die Möglichkeit einer drahtlosen (wireless) Datenübertragung. Insbesondere in den Bussystemen Profibus®, Foundation® Fieldbus und HART® ist eine drahtlose Datenübertragung über Funk spezifiziert. Ferner sind Funknetzwerke für Sensoren in dem Standard IEEE 802.15.4 näher spezifiziert. Zur Realisierung einer drahtlosen Datenübertragung sind neuere Feldgeräte, insbesondere Sensoren und Aktoren, teilweise als Funk-Feldgeräte ausgebildet. Diese weisen in der Regel eine Funkeinheit und eine Stromquelle als integrale Bestandteile auf. Dabei können die Funkeinheit und die Sromquelle in dem Feldgerät selbst oder in einem dauerhaft an dem Feldgerät angeschlossenen Funkmodul vorgesehen sein. Durch die Stromquelle wird eine autarke Energieversorgung des Feldgerätes ermöglicht.
Daneben besteht die Möglichkeit, Feldgeräte ohne Funkeinheiten durch die Kopplung mit einem Wireless Adapter, der eine Funkeinheit aufweist, zu einem Funk-Feldgerät aufzurüsten. Ein entsprechender Wireless Adapter ist beispielsweise in der Druckschrift WO 2005/103851 A1 beschrieben. Der Wireless Adapter wird in der Regel an eine Feldbus-Kommunikationsschnittstelle des Feldgerätes lösbar angeschlossen. Über die Feldbus-Kommunikationsschnittstelle kann das Feldgerät die über das Bussystem zu übermittelnden Daten an den Wireless Adapter senden, der diese dann über Funk an den Zielort übermittelt. Umgekehrt kann der Wireless Adapter über Funk Daten empfangen und über die Feldbus-Kommunikationsschnittstelle an das Feldgerät weiterleiten. Die Versorgung des Feldgeräts mit elektrischer Leistung erfolgt dann in der Regel über eine Energieversorgungseinheit des Wireless Adapters.

Bei autarken Funk-Feldgeräten und Wireless Adaptern wird die Kommunikation, beispielsweise mit einer übergeordneten Einheit, in der Regel über die drahtlose Schnittstelle des Funk-Feldgerätes bzw. des Wireless Adapters abgewickelt. Zusätzlich weisen solche Funk-Feldgeräte bzw. Wireless Adapter in der Regel eine drahtgebundene Kommunikationsschnittstelle auf. Beispielsweise ist in dem HART®-Standard vorgesehen, dass Funk-Feldgeräte neben einer drahtlosen Schnittstelle auch eine drahtgebundene Kommunikationsschnittstelle aufweisen müssen. Über solch eine drahtgebundene Kommunikationsschnittstelle ist beispielsweise vor Ort eine Konfiguration des Funk-Feldgerätes bzw. des Wireless Adapters über eine Service- und/oder Bedieneinheit, wie beispielsweise einen Handheld Communicator, die/der an der drahtgebundenen Kommunikationsschnittstelle angeschlossen wird, möglich. Ferner kann die drahtgebundene Kommunikationsschnittstelle als Feldbus-Kommunikationsschnittstelle ausgebildet sein, so dass die Kommunikation darüber entsprechend einem Bussystem, wie beispielsweise entsprechend einem der standardisierten Bussysteme Prafibus®, Foundation® Fieldbus oder HART®, abgewickelt wird. Über solch eine Feldbus-Kommunikationsschnittstelle kann das Funk-Feldgerät bzw. der Wireless Adapter auch an einen entsprechenden drahtgebundenen Feldbus angeschlossen werden.

Die Energieversorgungseinheit bzw. die Stromquelle eines Wireless Adapters oder eines Funk-Feldgerätes ist beispielsweise eine in dem Wireless Adapter bzw. dem Funk-Feldgerät vorgesehene Batterie, eine Brennstoffzelle, eine solare Energieversorgung und/oder ein Akku.

Werden Feldgeräte oder Funkadapter von einer Energieversorgungseinheit mit begrenztem Energievorrat gespeist, so können Probleme hinsichtlich eines ausreichenden Explosionsschutzes auftreten. Probleme zeigen sich, sobald das Feldgerät bzw. der Funkadapter an eine höhere Spannungsquelle anschlossen werden soll oder wenn Baugruppen in dem Feldgerät oder in dem Funkadapter vorhanden sind, die höhere Spannungen erzeugen als die Energieversorgungseinheit. In diesem Fall muss der Spannungsversorgte Teil des Feldgeräts oder des Funkadapters eine Barriere aufweisen, die die beiden nachfolgend genannten Aufgaben erfüllt:
- Verhinderung eines Rückladestroms zur Energieversorgungseinheit
- Verpolschutz.

Im Explosionsgefährdeten Bereich müssen zusätzlich folgende Anforderungen erfüllt sein:
- Verhinderung der Funkenbildung bei Abtrennung der Energieversorgungseinheit
- Abschottung interner Ladungsspeicher bzw. Spannungsquellen nach außen.

Eine bekannte Lösung für das o.g. Problem schlägt eine Barriere aus in Reihe geschalteten Dioden vor. Beispielsweise lässt sich durch eine Reihenschaltung von drei Dioden die Explosionsschutzart ex-ia realisieren. Der Nachteil der bekannten Lösung ist darin zu sehen, dass der Spannungsabfall über den Dioden zu einer relativ hohen Verlustleistung führt, was sich negativ auf die Lebensdauer der Energieversorgungseinheit, insbesondere der Batterie, niederschlägt. Der Spannungsabfall vergrößert sich mit der Erhöhung des aus der Batterie fließenden Stroms.

Eine weitere bekannte Lösung, die Teile der o.g. Aufgaben löst, sieht elektronische Schaltungen vor, die üblicherweise in einem Schaltkreis integriert sind und allgemein afs "ideale Dioden" bezeichnet werden. In diesen Schaltungen wird die Stromflussrichtung ermittelt und der Strom bei falscher Fiussrichtung mittels Schalter, z. b. mittels FET unterbrochen. Der Nachteil dieser Methode ist die relativ lange Reaktionszeit der Schaltungen: Es besteht beim Abtrennen der Batterie die Gefahr der Funkenbildung, was im Explosionsgefährdeten Bereich katastrophale Folgen haben kann. Durch die zu langsame Reaktion dieser Schaltungen, können auch Ladungsmengen grösser als 40µJ diese Barriere durchdringen, was in Bereichen explosionsgeschützter Umgebungen nicht zulässig ist.

Ausgehend von dem zuvor beschriebenen Stand der Technik liegt der Erfindung die Aufgabe zugrunde, eine Vorrichtung vorzuschlagen, mit der sich der Spannungsabfall und damit die Verlustleistung bei Feldgeräten, denen ein begrenzter Energievorrat zur Verfügung steht, minimieren lassen.

Die Aufgabe wird dadurch gelöst, dass zwischen der Energieversorgungseinheit und einer internen Spannungsquelle, deren Spannung die Spannung der Energieversorgungseinheit übersteigt bzw. zeitweise übersteigen kann, eine Barriere aus mindestens einer Diodengruppe mit zumindest zwei parallel geschalteten Dioden angeordnet ist, die einen Rückladestrom von der internen Spannungsquelle zur Energieversorgungseinheit bzw. zu den Anschlussklemmen des Feldgeräts bzw. des Funkadapters für die Energieversorgungseinheit blockiert. Über den zumindest zwei parallel geschalteten und baugleichen Dioden ist der Spannungsabfall nahezu gleich, und der Strom teilt sich auf die zumindest zwei Dioden zumindest näherungsweise gleich auf. Hierdurch wird der Effekt der Spannungserhöhung bei größer werdendem Strom vermindert. Es kommt bei der Parallelschaltung von Dioden im Gegensatz zu der bekannten Reihenschaltung zu einer deutlichen Reduktion des Effekts der Flussspannungserhöhung unter Last. Weiterhin wird erfindungsgemäß erreicht, dass nur eine limitierte, maximal zulässige Energiemenge beim Abtrennen der Batterie vom Feldgerät oder vom Adapter in den Prozess gelangt. Somit ist die erfindungsgemäße Vorrichtung auch im Explosionsgefährdeten Bereich einsetzbar.

Eine vorteilhafte Ausgestaltung sieht vor, dass dem Feldgerät oder dem Funkadapter ein Funkmodul zugeordnet ist und dass das Feldgerät über das Funkmodul und ein Funknetzwerk mit einer übergeordneten Steuereinheit kommuniziert. Weiterhin wird in diesem Zusammenhang vorgeschlagen, dass das Funkmodul in dem Funkadapter bzw. in einem Wireless Adapter integriert ist, der über eine erste an dem Feldgerät vorgesehenen Schnittstelle und eine zweite an dem Funkadapter vorgesehene Schnittstelle und entsprechende Verbindungsleitungen mit dem Feldgerät verbunden ist. Nähere Einzelheiten hierzu sind in der Beschreibungseinleitung der vorliegenden Patentanmeldung im Detail dargestellt.

Alternativ ist vorgesehen, dass das Feldgerät selbst keine eigene Energieversorgung aufweist, sondern über den Funkadapter fremd gespeist ist. Hierbei ist die Energieversorgungseinheit in den Funkadapter integriert ist, und der Datenaustausch und die Energieversorgung zwischen der Energieversorgungseinheit und dem Funkadapter erfolgen über dieselben beiden Verbindungsleitungen. Nähere Einzelheiten hierzu sind in der Beschreibungseinleitung der vorliegenden Patentanmeldung im Detail dargestellt.

Bevorzugt ist die Energieversorgungseinheit im Fall eines autarken Feldgeräts bzw. eines autarken Funkadapters direkt in das Feldgerät integriert. Nähere Einzelheiten hierzu sind in der Beschreibungseinleitung der vorliegenden Patentanmeldung im Detail dargestellt.

Eine besonders vorteilhafte Ausgestaltung des erfindungsgemäßen Feldgeräts bzw. des erfindungsgemäßen Funkadapters schlägt vor, dass die Barriere aus drei in Reihe geschalteten Diodenpaaren besteht, wobei die Dioden eines Diodenpaares parallel geschaltet sind. Mit dieser Ausgestaltung lässt sich die Explosionsschutzart ex-ia realisieren. Diese Explosionsschutzart fordert eine dreifache Redundanz der Dioden, d.h. beim Ausfall zweier Dioden ist immer noch die korrekte Funktion der Schaltung gewährleistet.

Bevorzugt handelt es sich bei den Dioden um Schottky-Dioden. Als Beispiel seien Schottky-Dioden vom Typ MBR0520 genannt. Schottky-Dioden haben gegenüber anderen Dioden den Vorteil, dass über ihnen der Spannungsabfall relativ gering ist und dass sie eine relativ schnelle Reaktionszeit aufweisen.

Vorteilhafter Weise sind die Dioden der Diodenpaare bzw. der Diodengruppen so ausgestaltet, dass bei einem Abtrennen der Energieversorgungseinheit von dem Feldgerät oder dem Funkadapter maximal 40µJ bzw. 40µVAs zu den Anschlussklemmen des Feldgeräts bzw. zu den Anschlussklemmen des Funkadapters, insbesondere zu den Anschlussklemmen der zugeordneten Energieversorgungseinheit gelangen.

Als Energieversorgungseinheit kommt im Zusammenhang mit der Erfindung bevorzugt eine Batterie in Betracht. Alternativ können auch eine Brennstoffzelle, eine solare Energieversorgung oder ein Akku verwendet werden.

Wie bereits an vorhergehender Stelle beschrieben, kann auch in Verbindung mit der Erfindung die Kommunikation zwischen dem Feldgerät bzw. dem Funkadapter und der übergeordneten Steuereinheit basierend auf einem der in de Automatisierungstechnik gebräuchlichen Kommunikationsprotokolle erfolgen.

Die Erfindung wird anhand der nachfolgenden Figuren näher erläutert. Es zeigt:
Fig. 1: eine schematische Darstellung eines Funknetzwerks mit mehreren Feldgeräten,
Fig. 2: ein Blockschaltbild einer bevorzugten Ausgestaltung des erfindungsgemäßen Wireless Adapters,
Fig. 3: eine schematische Darstellung der erfindungsgemäßen Vorrichtung,
Fig. 4: eine Barriere aus drei in Reihe geschalteten Diodengruppen, wobei jede Diodengruppe aus n parallel geschalteten Dioden besteht, und
Fig. 5: eine Barriere aus drei in Reihe geschalteten Diodengruppen, wobei jede Diodengruppe aus zwei parallel geschalteten Dioden besteht.

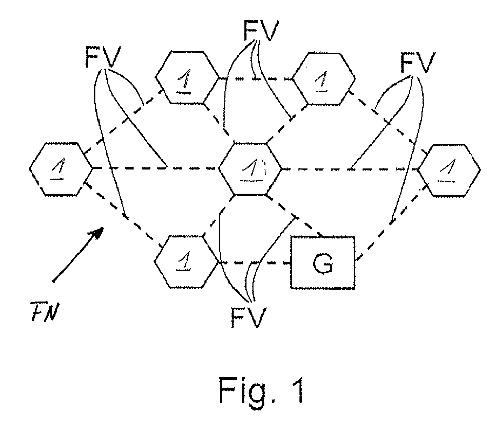

In Fig. 1 ist ein Funknetzwerk mit mehreren Feldgeräten 1, die jeweils als Funk-Feldgeräte ausgebildet sind, und einem Gateway G dargestellt. Die Feldgeräte 1 stehen untereinander und mit dem Gateway G jeweils in Funkverbindung FV, was in Fig. 1 durch die gestrichelten Linien dargestellt ist. Dadurch, dass die Feldgeräte 1 und das Gateway G jeweils über mehrere Funkverbindungen FV in Verbindung stehen, kann selbst bei einem Ausfall einer der Funkverbindungen FV die Kommunikation über eine der anderen Funkverbindungen FV aufrechterhalten werden.

Als Funkübertragungstechnologien für die Funkverbindungen FV sind beispielsweise Frequency Hopping Spread Spectrum (FHSS) oder Direct Sequence Spread Spectrum (DSSS) Verfahren geeignet. Aufgrund der benötigten geringen Sendeleistungen ist auch die Ultrawideband-Technologie (UWB) sehr gut geeignet.

Bei dem Gateway G kann es sich um eine Fernübertragungseinheit, z.B. das Produkt "Fieldgate" der Firma Endress + Hauser, handeln. In diesem Fall kann das Gateway G weltweit zum Beispiel via Internet, GSM oder Festnetz mit einer übergeordneten Einheit kommunizieren. Ferner kann/können eine (nicht dargestellte) übergeordnete Einheit und/oder ein (nicht dargestelltes) Bediengerät auch direkt über eine entsprechende Funkverbindung mit dem dargestellten Funknetzwerk kommunizieren.

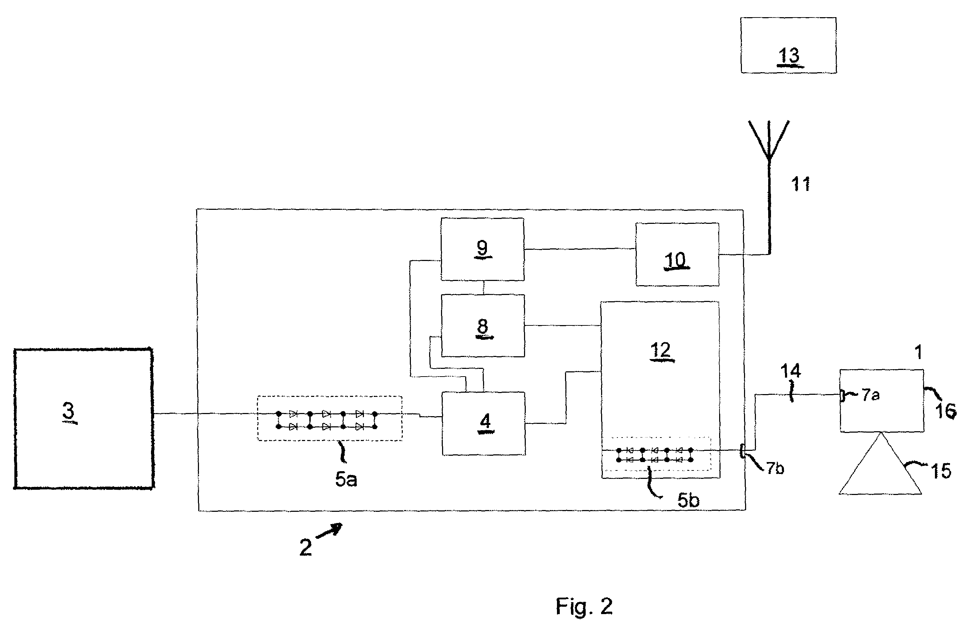

In Fig. 2 ist eine schematische Darstellung einer bevorzugten Ausgestaltung des erfindungsgemäßen Wireless Adapters 2 dargestellt. Im gezeigten Beispiel ist ein herkömmlich ausgebildetes Feldgerät 1 über eine Verbindungsleitung 14 mit dem Wireless Adapter 2 verbunden. Durch Anschluss des Wireless Adapters 2 wird das Feldgerät 1 zu einem Funk-Feldgerät, wie es beispielsweise in Fig. 1 durch die Feldgeräte 1 dargestellt ist, aufgerüstet.

Das Feldgerät 1 setzt sich aus einem Messwertaufnehmer bzw. Sensor 15 und einem Messumformer 16 zusammen. Das Feldgerät 1 kann - wie bereits zuvor ausführlich dargelegt - zu Bestimmung und/oder Beeinflussung beliebiger Prozessgrößen ausgelegt sein.

In dem Funkadapter 2 sind unterschiedliche Komponenten, bevorzugt auf einer Platine, angeordnet. Über ein Interface 12 und die Verbindungsleitungen 14 steht der Funkadapter 2 mit dem Messumformer 16 in Verbindung. Mit dem Interface 12 ist eine Baugruppe zur Spannungswandlung 4 und ein Kommunikationsmodul 8 bzw. eine Kommunikationsschnittstelle 8 verbunden. Im Sinne der Erfindung stellt die Baugruppe zur Spannungswandlung eine interne Spannungsquelle 4 dar. Die Baugruppe zur Spannungswandlung 4 ist mit dem Kommunikationsmodul 8 und dem Mikroprozessor 9 verbunden.

Das Feldgerät 1 und der Wireless Adapter 2 stehen miteinander in einer Kommunikationsverbindung. Bei der drahtgebundenen Kommunikationsschnittstelle 7a, 7b handelt es sich bevorzugt um eine HART®-Kommunikationsschnittstelle. Der Kommunikationsschnittstelle 7a, 7b ist eine Funktionseinheit zugeordnet, die das Senden und/oder Empfangen von digitalen Signalen (z.B. entsprechend dem HART®-Standard) über die Kommunikationsschnittstelle 7a durchführt. Über die Kommunikationsschnittstelle 7a kann das Feldgerät 1 auch - alternativ zu dem dargestellten Anschluss an den Wireless Adapter 2 - an ein drahtgebundenes, in der Automatisierungstechnik gebräuchliches Feldbussystem, z.B. ein HART®-Feldbussystem, angeschlossen werden.

Ferner weist das Feldgerät 1 einen gleichfalls nicht gesonderten Mikroprozessor und einen Datenspeicher auf, in dem u.a. Parameter des Feldgerätes 1 abgelegt sind. Ein Zugriff auf den Datenspeicher erfolgt über den Mikroprozessor. Für eine Bedienung des Feldgerätes 1 vor Ort ist an dem Feldgerät 1 üblicherweise eine gleichfalls nicht gesondert dargestellt Anzeige- und Bedieneinheit vorgesehen, die in Kommunikationsverbindung mit dem Mikroprozessor steht.

Der Wireless Adapter 4 weist - wie bereits erwähnt, eine Steuereinheit in Form eines Mikroprozessors 9 auf. Zum Datenaustausch über das FunkNetzwerk FN ist der Mikroprozessor 9 mit einer Funkeinheit 10 verbunden, die ein RF-Chipset und eine Antenne 11 aufweist. Die Funkeinheit 10 ist dabei derart ausgebildet, dass die drahtlose Kommunikation gemäß einem der in der Automatisierungstechnik gebräuchlichen Standards, bevorzugt gemäß dem HART®-Standard, erfolgt. Der Mikroprozessor 9 ist ferner mit einem nicht gesondert dargestellten Datenspeicher verbunden, in dem unter anderem Parameter des Wireless Adapters 2 abgelegt sind. Zur Kommunikation mit dem Feldgerät 1 weist der Wireless Adapter 2 eine drahtgebundene Kommunikationsschnittstelle 7b auf, der wiederum eine Funktionseinheit, die das Senden und/oder Empfangen von digitalen Signalen über die Kommunikationsschnittstelle 7b durchführt, zugeordnet ist.

Bei der in Fig. 2 dargestellten Anordnung werden die Kommunikationsschnittstelle 7a des Feldgerätes 1 und die Kommunikationsschnittstelle 7b des Wireless Adapters 2 über eine 2-Leiter-Verbindungsleitung 14 miteinander verbunden. Über diese Verbindung erfolgt sowohl die Kommunikation zwischen dem Feldgerät 1 und dem Wireless Adapter 2 als auch die Stromversorgung des Feldgerätes 1 durch den Wireless Adapter 2.

Zwecks Bereitstellung der Stromversorgung des Feldgerätes 1 und des Wireless Adapters 2 ist dem Wireless Adapter 2 eine Energieversorgungseinheit 3 zugeordnet. Die Energieversorgungseinheit 3 ist in der Lage, das Feldgerät 1 bzw. den Funkadapter 2 und das Feldgerät 1 mit einer begrenzten Energie zu versorgen. Bei der Energieversorgungseinheit 3 handelt es sich z.B. um eine Batterie, einen Akku, ein Solarpanel oder eine Brennstoffstelle. Bei dem dargestellten Feldgerät 1 bzw. bei dem dargestellten Funkadapter 2 handelt es sich folglich um Energieautarke Einheiten.

In Fig. 2 ist der Fall dargestellt, dass das Funkmodul 10 in einen Funkadapter 2 integriert ist. Durch Anschluss des Funkadapters 2 an das herkömmliche Feldgerät 1 lässt sich das Feldgerät 1 in ein Funk-Feldgerät umrüsten. Es versteht sich von selbst, dass das Funkmodul 10 auch direkt in das Feldgerät 1 integriert sein kann.

Erfindungsgemäß ist zumindest eine Barriere 5a, 5b vorgesehen, die einen Rückladestrom von der internen Spannungsquelle 4 zur Energieversorgungseinheit 3 bzw. zu den Anschlussklemmen 7a des Feldgeräts 1 bzw. zu den Anschlussklemmen 7b des Funkadapters 2 für die Energieversorgungseinheit 3 blockiert. Bei der in Fig. 2 gezeigten Ausführungsform der erfindungsgemäßen Vorrichtung ist eine Barriere 5a zwischen der Baugruppe zur Spannungswandlung 4 und der Energieversorgungseinheit 3 angeordnet. Eine weitere Barriere 5b ist zwischen dem Interface 12 und dem Messumformer 16 vorgesehen.

Die Barrieren 5a, 5b bestehen im gezeigten Fall aus drei in Serie geschalteten Diodengruppen mit jeweils zwei parallel geschalteten Dioden 6. Durch die Parallelschaltung von jeweils zwei gleichen Dioden 6 ist der Spannungsabfall über den Dioden 6 in etwa gleich, und der an den parallelen Dioden anliegende Strom teilt sich zumindest nahezu gleich auf. Hierdurch lässt sich eine geringere Verlustleistung erreichen, was sich in einer erhöhten Lebensdauer der Batterie bzw. der Energieversorgungseinheit 3 niederschlägt. Durch die serielle Anordnung von drei Diodenpaaren, was einer dreifachen Redundanz entspricht, lässt sich wiederum die Explosionsschutzart ex-ia realisieren.

Bei den Dioden handelt es sich bevorzugt um Schottky-Dioden. Schottky-Dioden zeichnen sich durch einen relativ niedrigen Spannungsabfall von 0.2-0.5V pro Diode bei relativ schnellen Umschaltzeiten aus.

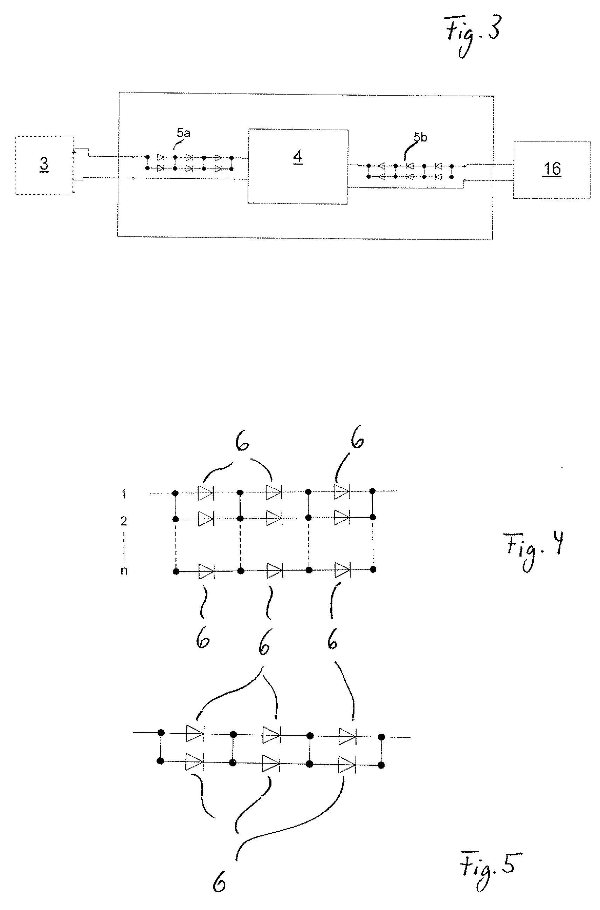

Fig. 3 zeigt eine schematische Darstellung des erfindungsgemäßen autarken Feldgeräts bzw. des autarken Funkadapters. Bei der Baugruppe 4, welche keine Rückwirkung auf die Energieversorgungseinheit 3 haben darf, handelt es sich beispielsweise um die Hauptplatine des Funkadapters 2. Um sicherzustellen, dass kein Rückladestrom von der Baugruppe 4 zu der Energieversorgungseinheit 3 gelangt, ist die Barriere 5a vorgesehen, die die in Fig. 5 gezeigte Ausgestaltung aufweist. Damit die Hauptplatine des Funkadapters 2 keine Rückwirkung auf den Messumformer 16 hat, ist die Barriere 5b zwischen geschaltet.

Unter Rückwirkung ist in Bezug auf den Einsatz des Feldgeräts bzw. des Funkadapters im Explosionsgefährdeten Bereich ein Strom zu verstehen, der eine Ladung größer als Q = I x t = 40µJ von der Baugruppe 4 zur Energieversorgungseinheit oder von der Baugruppe 4 zum Messumformer 16 transportiert.

In Fig. 4 ist eine alternativ ausgestaltete Barriere dargestellt, bestehend aus drei in Reihe geschalteten Diodengruppen, wobei jede Diodengruppe n parallel geschalteten Dioden 6 umfasst.

### Bezugszeichenliste

- 1: Feldgerät
- 2: Funkadapter bzw. Wireless Adapter
- 3: Energieversorgungseinheit
- 4: interne Spannungsquelle
- 5a: Barriere
- 5b: Barriere
- 6: Diode
- 7a: Anschlussklemme
- 7b: Anschlussklemme
- 8: Kommunikationsmodul / Kommunikationsschnittstelle
- 9: Mikroprozessor
- 10: Funkmodul
- 11: Antenne
- 12: Interface
- 13: Steuereinheit
- 14: Verbindungsleitung
- 15: Messaufnehmer / Sensor
- 16: Messumformer

- G: Gateway
- FN: Funknetzwerk
- FV: Funkverbindung

## Patentansprüche

1. Autarkes Feldgerät oder autarker Funkadapter (2) für ein Feldgerät (1) der Automatisierungstechnik, das/der über eine dem Feldgerät (1) oder dem Funkadapter (2) zugeordnete oder zuordenbare Energieversorgungseinheit (3) mit einer begrenzten Energie gespeist wird, **dadurch gekennzeichnet, dass** zwischen der Energieversorgungseinheit (3) und einer internen Spannungsquelle (4), deren Spannung die Spannung der Energieversorgungseinheit (3) übersteigt bzw. zeitweise übersteigen kann, eine Barriere (5a; 5b) aus mindestens einer Diodengruppe mit zumindest zwei parallel geschalteten Dioden (6) angeordnet ist, die einen Rückladestrom von der internen Spannungsquelle (4) zur Energieversorgungseinheit (3) bzw. zu den Anschlussklemmen (7) des Feldgeräts (1) bzw. des Funkadapters (2) für die Energieversorgungseinheit (3) blockiert.

2. Feldgerät nach Anspruch 1, **dadurch gekennzeichnet, dass** dem Feldgerät (1) oder dem Funkadapter (2) ein Funkmodul (10) zugeordnet ist und dass das Feldgerät (1) über das Funkmodul (10) und ein Funknetzwerk (FN) mit einer übergeordneten Steuereinheit (13) kommuniziert.

3. Feldgerät nach Anspruch 2, **dadurch gekennzeichnet, dass** das Funkmodul (10) in dem Funkadapter (2) bzw. in einem Wireless Adapter integriert ist, der über eine erste an dem Feldgerät (1) vorgesehenen Schnittstelle (7a) und eine zweite an dem Funkadapter (2) vorgesehene Schnittstelle (7b) und entsprechende Verbindungsleitungen (14) mit dem Feldgerät (1) verbunden ist.

4. Feldgerät nach Anspruch 3, **dadurch gekennzeichnet, dass** die Energieversorgungseinheit (3) in den Funkadapter (2) integriert ist, und dass der Datenaustausch und die Energieversorgung zwischen der Energieversorgungseinheit (3) und dem Funkadapter (2) über dieselben beiden Verbindungsleitungen erfolgen.

5. Feldgerät nach Anspruch 1, **dadurch gekennzeichnet, dass** die Energieversorgungseinheit (3) und das Funkmodul (10) in das Feldgerät (1) integriert sind.

6. Feldgerät nach Anspruch 1, **dadurch gekennzeichnet, dass** die Barriere (5a, 5b) aus drei in Reihe geschalteten Diodenpaaren besteht, wobei die Dioden (6) eines Diodenpaares parallel geschaltet sind.

7. Feldgerät nach Anspruch 1 oder 5, **dadurch gekennzeichnet, dass** es sich bei den Dioden (6) um Schottky-Dioden handelt.

8. Feldgerät nach einem oder mehreren der Ansprüche 1-3 oder 5-6, **dadurch gekennzeichnet, dass** die Dioden (6) der Diodenpaare bzw. der Diodengruppen so ausgestaltet sind, dass bei einem Abtrennen der Energieversorgungseinheit (3) von dem Feldgerät (1) oder dem Funkadapter (2) maximal 40µJ bzw. 40µVAs zu den Anschlussklemmen (7a) des Feldgeräts (1) bzw. zu den Anschlussklemmen (7b) des Funkadapters (2), insbesondere zu den Anschlussklemmen der zugeordneten Energieversorgungseinheit gelangen.

9. Feldgerät nach Anspruch 1, 3, 4 oder 7, **dadurch gekennzeichnet, dass** es sich bei der Energieversorgungseinheit (3) um eine Batterie, eine Brennstoffzelle, eine solare Energieversorgung oder um einen Akku handelt.

10. Feldgerät nach Anspruch 1, **dadurch gekennzeichnet, dass** die Kommunikation zwischen dem Feldgerät (1) bzw. dem Funkadapter (2) und der übergeordneten Steuereinheit (13) basierend auf einem der in de Automatisierungstechnik gebräuchlichen Kommunikationsprotokolle erfolgt.

## Claims

1. Autonomous field device or wireless adapter (2) for a field device (1) used in automation technology which is powered by a power supply unit (3) that is assigned or assignable to the field device (1) or the wireless adapter (2), **characterized in that** a barrier (5a; 5b) is arranged between the power supply unit (3) and an internal voltage source (4), whose voltage exceeds or can temporarily exceed the voltage of the power supply unit (3), said barrier consisting of at least one diode group with at least two diodes (6) switched in parallel and blocking a reverse charging current from the internal voltage source (4) to the power supply unit (3) or to the terminals (7) of the field device (1) or the wireless adapter (2) for the power supply unit (3).

2. Field device as claimed in Claim 1, **characterized in that** a wireless module (10) is assigned to the field device (1) or the wireless adapter (2) and that the field device (1) communicates with a higher order control unit (13) via the wireless module (10) and a wireless network (FN).

3. Field device as claimed in Claim 2, **characterized in that** the wireless module (10) is integrated in the wireless adapter (2) or in a wireless adapter which is connected to the field device (1) via a first interface (7a) provided on the field device (1) and a second interface (7b) provided on the wireless adapter (2) and corresponding connecting cables (14).

4. Field device as claimed in Claim 3, **characterized in that** the power supply unit (3) is integrated in the wireless adapter (2) and **in that** data exchange and power supply between the power supply unit (3) and the wireless adapter (2) is performed via the same two connecting cables.

5. Field device as claimed in Claim 1, **characterized in that** the power supply unit (3) and the wireless module (10) are integrated into the field device (1).

6. Field device as claimed in Claim 1, **characterized in that** the barrier (5a, 5b) consists of three pairs of diodes switched in series, wherein the diodes (6) of one diode pair are switched in parallel.

7. Field device as claimed in Claim 1 or 5, **characterized in that** the diodes are Schottky diodes (6).

8. Field device as claimed in one or more of the Claims 1-3 or 5-6, **characterized in that** the diodes (6) of the diode pairs or the diode groups are designed in such a way that when the power supply unit (3) is disconnected from the field device (1) or the wireless adapter (2), a maximum of 40 µJ or 40 µVAs reach the terminals (7a) of the field device (1) or the terminals (7b) of the wireless adapter (2), particularly the terminals of the assigned power supply unit.

9. Field device as claimed in Claim 1, 3, 4 or 7, **characterized in that** the power supply unit (3) is a battery, a fuel cell, solar power supply or a storage battery.

10. Field device as claimed in Claim 1, **characterized in that** the communication between the field device (1) and/or the wireless adapter (2) and the higher-order control unit (13) is performed on the basis of one of the communication protocols common in automation technology.

## Revendications

1. Appareil de terrain autonome ou adaptateur radio autonome (2) pour un appareil de terrain (1) de la technique d'automatisation, lequel appareil ou adaptateur est alimenté avec une énergie limitée au moyen d'une unité d'alimentation en énergie (3) attribuée à l'appareil de terrain (1) ou à l'adaptateur radio (2),
**caractérisé**
**en ce qu'**entre l'unité d'alimentation en énergie (3) et une source de tension interne (4), dont la tension dépasse ou peut dépasser temporairement la tension de l'unité d'alimentation en énergie (3), est disposée une barrière (5a, 5b) constituée au moins d'un groupe de diodes dont au moins deux diodes sont couplées en parallèle (6), laquelle barrière bloque un courant de décharge circulant de la source de tension interne (4) vers l'unité d'alimentation en énergie (3) ou vers les bornes de raccordement (7) de l'appareil de terrain (1) ou de l'adaptateur radio (2) pour l'unité d'alimentation en énergie (3).

2. Appareil de terrain selon la revendication 1, **caractérisé en ce qu'**est attribué un module radio (10) à l'appareil de terrain (1) ou à l'adaptateur radio (2) et **en ce que** l'appareil de terrain (1) communique via le module radio (10) et un réseau radio (FN) avec une unité de commande maître (13).

3. Appareil de terrain selon la revendication 2, **caractérisé en ce que** le module radio (10) est intégré dans l'adaptateur radio (2) ou dans un adaptateur sans fil, qui est relié avec l'appareil de terrain (1) via une première interface (7a) prévue sur l'appareil de terrain (1) et une deuxième interface (7b) prévue sur l'adaptateur radio (2), et avec des câbles de liaison (14) correspondants.

4. Appareil de terrain selon la revendication 3, **caractérisé en ce que** l'unité d'alimentation en énergie (3) est intégrée dans l'adaptateur radio (2), et **en ce que** l'échange de données et l'alimentation en énergie entre l'unité d'alimentation en énergie (3) et l'adaptateur radio (2) s'effectuent par le biais des mêmes deux câbles de liaison.

5. Appareil de terrain selon la revendication 1, **caractérisé en ce que** l'unité d'alimentation en énergie (3) et le module radio (10) sont intégrés dans l'appareil de terrain (1).

6. Appareil de terrain selon la revendication 1, **caractérisé en ce que** la barrière (5a, 5b) est constituée de trois paires de diodes couplées en série, les diodes (6) d'une paire de diodes étant couplées en parallèle.

7. Appareil de terrain selon la revendication 1 ou 5, **caractérisé en ce qu'**il s'agit de diodes Schottky concernant les diodes (6).

8. Appareil de terrain selon l'une ou plusieurs des revendications 1 à 3 ou 5 à 6, **caractérisé en ce que** les diodes (6) de la paire de diodes ou des groupes de diodes sont conçues de telle sorte, qu'en cas de déconnexion de l'unité d'alimentation en énergie (3) de l'appareil de terrain (1) ou de l'adaptateur radio (2), un maximum de 40 µJ ou 40 µVAs parviennent aux bornes de raccordement (7a) de l'appareil de terrain (1) ou aux bornes de raccordement (7b) de l'adaptateur radio (2), notamment aux bornes de raccordement de l'unité d'alimentation en énergie correspondante.

9. Appareil de terrain selon la revendication 1, 3, 4 ou 7, **caractérisé en ce qu'**il s'agit, concernant l'unité d'alimentation en énergie (3), d'une batterie, d'une pile à combustible, d'une alimentation en énergie solaire ou d'un accumulateur.

10. Appareil de terrain selon la revendication 1, **caractérisé en ce que** la communication entre l'appareil de terrain (1) ou l'adaptateur radio (2) et l'unité de commande maître (13) s'effectue sur la base d'un protocole de communication usuel dans la technique d'automatisation.
